# EUROPÄISCHE PATENTANMELDUNG

(11) **EP 1 741 939 A2**
(43) Veröffentlichungstag der Anmeldung: **10.01.2007**
(21) Anmeldenummer: 06013554.8
(22) Anmeldetag: 30.06.2006
(51) Int. Cl.: F16C 1/26

(54) **Bestätigungszug mit aussenseitiger Abstützung**

(30) Priorität: 08.07.2005 DE 202005010917
(71) Anmelder: Dura Automotive Systems GmbH, 40549 Düsseldorf (DE)
(72) Erfinder: Hein, Kersten, 56743 Mending (DE); Schmidt, Marco, 54552 Darscheid (DE)
(74) Vertreter: Paul, Dieter-Alfred

(57) **Zusammenfassung**

Die Erfindung betrifft einen Betätigungszug mit einem schlauchartigen Betätigungsmantel (1) und einer Betätigungsseele, welche den Betätigungsmantel (1) durchgreift und darin axial beweglich geführt ist, wobei die aus dem Betäigungsmantel (1) herausragenden Enden der Betätigungsseele mit einem Betätigungsorgan (2) oder einem zu betätigenden Organ (3) verbindbar sind, welcher dadurch gekennzeichnet ist, daß mindestens ein axialer Teilabschnitt des Betätigungsmantels (1) von einem insbesondere hülsenartigen Stützelement (4) umgeben ist, welches derart ausgebildet und an dem Betätigungsmantel (1) fixiert ist, daß der Betätigungsmantel (1) in dem axialen Teilabschnitt durch das Stützelement (4) ausgerichtet wird.

## Beschreibung

Die vorliegende Erfindung betrifft einen Betätigungszug mit einem schlauchartigen Betätigungsmantel und einer Betätigungsseele, welche den Betätigungsmantel durchgreift und darin axial beweglich geführt ist, wobei die aus dem Betäigungsmantel herausragenden Enden der Betätigungsseele mit einem Betätigungsorgan oder einem zu betätigenden Organ verbindbar sind.

Mechanische Betätigungszüge dieser Art sind in vielfältigen Ausführungsformen bekannt und werden insbesondere im Bereich der Fahrzeugtechnik zur Verbindung eines Schalthebels mit einem Getriebe eingesetzt. In ihrem grundsätzlichen Aufbau bestehen sie aus einem schlauchförmigen, biegsamen Betätigungsmantel, in dem eine meist als Drahtlitze oder -seil ausgebildete Betätigungsseele axial beweglich geführt ist. Die Betätigungsseele ragt an beiden Enden aus dem Betätigungsmantel heraus und besitzt dort Anschlußstücke, um sie einerends mit dem Betätigungsorgan und anderenends mit dem zu betätigenden Organ verbinden zu können. Dabei können Betätigungsmantel und Betätigungsseele so ausgebildet sein, daß nicht nur eine Zugkraftübertragung möglich ist, sondern auch Druckkräfte weitergegeben werden können.

Wenn solche Betätigungszüge in Fahrzeugen als Schaltzüge zwischen dem Getriebe und dem Schalthebel eingesetzt werden, kann die in dem Betätigungsmantel geführte Betätigungsseele, welche durch ein Endstück mit dem Getriebe verbunden ist, aufgrund von Vibrationen am Getriebe in Schwingungen versetzt werden. Durch dieses Schwingen entsteht zwischen der Oberfläche der Betätigungsseele und der Innenwand des Betätigungsmantels ein charakteristisches, metallisch klingendes Geräusch, das bei starker Anregung sehr deutlich und laut und bei geringerer Anregung als Geräusch mit hellerem Klang wahrzunehmen ist.

Vor diesem Hintergrund liegt der Erfindung die Aufgabe zugrunde, einen Betätigungszug der eingangs genannten Art so auszubilden, daß charakteristische Geräuschbildungen reduziert bzw. eliminiert werden können.

Diese Aufgabe ist erfindungsgemäß dadurch gelöst, daß mindestens ein axialer Teilabschnitt des Betätigungsmantels von einem insbesondere hülsenartigen Stützelement umgeben ist, welches derart ausgebildet und an dem Betätigungsmantel fixiert ist, daß der Betätigungsmantel in dem axialen Teilabschnitt durch das Stützelement ausgerichtet wird. Es hat sich gezeigt, daß durch die erfindungsgemäße Zwangsausrichtung des Betätigungsmantels mittels des Stützelements die charakteristische Geräuschbildung bei starken Anregungen, welche beispielsweise durch ein Getriebe generiert werden, eliminiert wird. Dies ist im wesentlichen darauf zurückzuführen, daß aufgrund der in Teilbereichen stattfindenden Zwangsausrichtung des Betätigungsmantels im Innern des Betätigungsmantels Anlegestellen entstehen, die der Betätigungsseele den Freiraum für mögliche Schwingungen nehmen und auf diese Weise der charakteristischen Geräuschbildung entgegenwirken. Dabei kann der Betätigungsmantel durch die Stützelemente gradlinig ausgerichtet werden oder eine gebogene Form erhalten.

Um optimale Ergebnisse zu erzielen, kann bei einem Betätigungszug vorgegebener Länge die Anzahl der Stützelemente sowie deren Position und Länge variieren. Desweiteren kann das Material der Stützelemente das Ergebnis beeinflussen. Mögliche Materialien für die Stützelemente sind beispielsweise Metall oder Kunststoff.

Dabei ist es möglich, die Stützelemente auf unterschiedliche Weise mit dem Betätigungsmantel zu verbinden. Beispielsweise ist es möglich, die Stützelemente mit dem Betätigungsmantel zu verpressen oder zu verkleben. Alternativ ist es möglich, die Stützelemente auf den Betätigungsmantel aufzuschieben und den zwischen dem Betätigungsmantel und dem Schließelement gebildeten Ringraum oder Ringspalt mit einem Kunststoff zu vergießen. Auch ist es möglich, die Stützelemente auf den Betätigungsmantel aufzuspritzen. Durch Auswahl einer geeigneten Befestigungsart kann die Geräuschentwicklung ebenfalls beeinflußt werden.

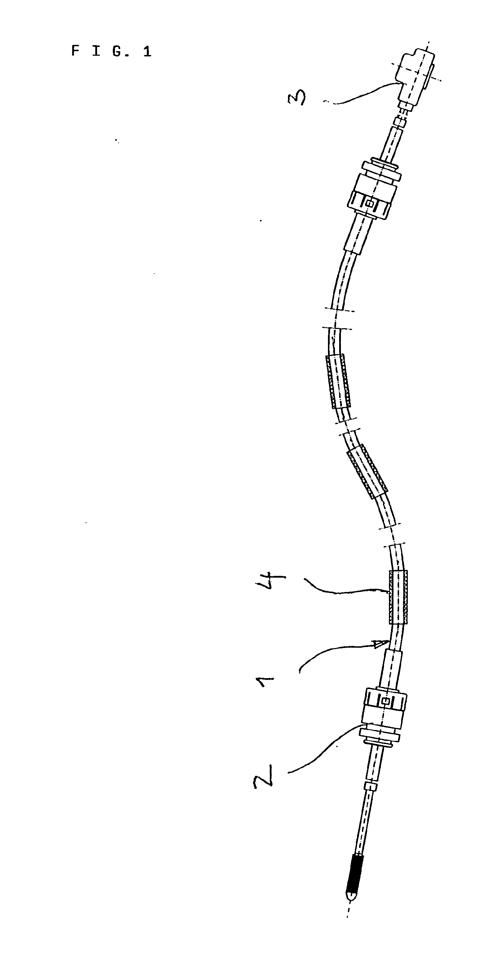

Hinsichtlich vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt die einzige Figur einen erfindungsgemäßen Betätigungszug, der insbesondere in Fahrzeugen als Schalt- ode Wählzug, eingesetzt werden kann. Der Betätigungszug besteht in an sich bekannter Weise aus einem schlauchartigen Betätigungsmantel 1 und einer nicht dargestellten Betätigungsseele, welche den Betätigungsmantel 1 durchgreift und darin axial beweglich geführt ist. Die aus dem Betätigungsmantel 1 herausragenden Enden der Betätigungsseele sind jeweils mit Anschlußstücken 2, 3 zur Verbindung mit einem Betätigungsorgan oder einem zu betätigenden Organ verbunden.

Erfindungsgemäß sind nun an dem Betätigungsmantel 1 drei hülsenartige Stützelemente 4 aus Metall oder Kunststoff angebracht, welche den Betätigungsmantel 1 in voneinander beabstandeten axialen Teilabschnitten umgeben und in diesen Teilbereichen derart zwangsführen bzw. ausrichten, daß der Betätigungsmantel sich in den gebildeten Stützzonen nicht biegen kann. Es hat sich gezeigt, daß durch diese Stützzonen eine Geräuschbildung aufgrund von Vibrationen am Getriebe, die an die Betätigungsseele übertragen werden, wirksam verhindert werden kann. In der dargestellten Ausführungsform sind die Stützelemente 4 alle gleich lang ausgebildet. Es ist jedoch auch möglich, unterschiedlich lange Stützelemente 4 einzusetzen oder ihre Anzahl bzw. Position zu verändern.

## Patentansprüche

1. Betätigungszug mit einem schlauchartigen Betätigungsmantel (1) und einer Betätigungsseele, welche den Betätigungsmantel (1) durchgreift und darin axial beweglich geführt ist, wobei die aus dem Betäigungsmantel (1) herausragenden Enden der Betätigungsseele mit einem Betätigungsorgan (2) oder einem zu betätigenden Organ (3) verbindbar sind, **dadurch gekennzeichnet, daß** mindestens ein axialer Teilabschnitt des Betätigungsmantels (1) von einem insbesondere hülsenartigen Stützelement (4) umgeben ist, welches derart ausgebildet und an dem Betätigungsmantel (1) fixiert ist, daß der Betätigungsmantel (1) in dem axialen Teilabschnitt durch das Stützelement (4) ausgerichtet wird.

2. Betätigungszug nach Anspruch 1, **dadurch gekennzeichnet, daß** mehrere Stützelemente (4) in axialem Abstand voneinander an dem Betätigungsmantel (1) angeordnet sind, um den Betätigungsmantel (1) in mehreren axialen Teilabschnitten außenseitig abzustützen.

3. Betätigungszug nach Anspruch 1 oder 2, **dadurch gekennzeichnet, daß** die Stützelemente (4) aus Metall oder Kunststoff bestehen.

4. Betätigungszug nach einem der vorherigen Ansprüche, **dadurch gekennzeichnet, daß** die Stützelemente (4) mit dem Betätigungsmantel (1) verpreßt sind.

5. Betätigungszug nach einem der Ansprüche 1 bis 3, **dadurch gekennzeichnet, daß** die Stützelemente (4) auf den Betätigungsmantel (1) aufgeschoben und mit dem Betätigungsmantel (1) verklebt sind.

6. Betätigungszug nach einem der Ansprüche 1 bis 3, **dadurch gekennzeichnet, daß** die Stützelemente (4) auf den Betätigungsmantel (1) aufgeschoben sind, wobei der zwischen dem Betätigungsmantel (1) und dem Stützelement (4) gebildete Ringraum oder Ringspalt mit einem Kunststoff vergossen ist.

7. Betätigungszug nach einem der Ansprüche 1 bis 3, **dadurch gekennzeichnet, daß** die Stützelemente (4) auf den Betätigungsmantel (1) aufgespritzt sind.
